# EUROPEAN PATENT SPECIFICATION

(11) **EP 1 465 370 B1**
(45) Date of publication and mention of the grant of the patent: **24.07.2013**
(21) Application number: 03007845.5
(22) Date of filing: 05.04.2003
(51) Int. Cl.: H04L 12/70, H04L 12/66

(54) **Predictable real time data communication on a serial bus**
Vorhersagbare Echtzeitdatenübertragung in einem seriellen Bus
Communication de données prévisible en temps réel sur un bus en serie

(43) Date of publication of application: 06.10.2004
(73) Proprietor: Mentor Graphics Corporation, Wilsonville, OR 97070-7777 (US)
(72) Inventor: Jacobsson, Thomas, 41260 Göteborg (SE); Bengtsson, Henrik, 41305 Göteborg (SE); Fransson, Matthias, 41466 Göteborg (SE)
(74) Representative: Edlund, Fabian

(56) References cited:
- EP-A- 1 116 630
- US-A- 5 719 858
- US-A- 5 982 780

## Description

### Technical field

The present invention relates to a method for communicating data between a plurality of nodes connected by a serial bus carrying data in clocked data frames.

The invention also relates to a network node connected to a serial bus for carrying data to and from other nodes in clocked data frames, including a transceiver connected to the serial bus, for transmitting and receiving the clocked data frames, and a device driver, connecting the transceiver with a digital device serviced by the node.

### Technical background

In an environment where high timing requirement exist in communication between digital systems, it is known to connect several digital systems to a network, wherein several network nodes are interconnected with a serial data bus having a synchronous physical layer. Each node comprises a transceiver, acting as an interface towards the data bus, and a device driver connecting the transceiver with the digital system connected to the node. Such networks are increasingly used in multimedia implementations, e.g. in homes and in vehicles. High timing requirements are present for example in relation to the HMI (Human Man Interface) such as when a button is pressed and the action on another node must be performed in a deterministic way. A touchscreen to a navigation system is one of many examples.

Such networks can be based on the optical technology standard D2B (Domestic Digital Bus), which is described in the patents US 4,429,384, US 5,499,018, US 5,675,571, and US 5,712,852.

One successor of D2B is MOST (Media Oriented Systems Transport), a 25 Mbps optical network for automotive infotainment applications. Some aspects related to the MOST network are disclosed in the patent US 6,437,710, and the patent applications US 2001/0019311 and US 2001/0025376.

Typically, such networks are adapted to communicate real-time streaming data as well as application control data.

The real-time streaming data is sent in a synchronous channel of the serial bus, by allocating a portion of this channel to a particular node and letting this node place data in the allocated portion. While being a fully deterministic way to send streaming data, this principle is not adequate when several nodes frequently want to send small pieces of information, and in particular it is not suitable for application control data.

Instead, the application control data is sent on a control channel of the data bus, and in the MOST network this control channel is operated in asynchronous mode, i.e. the individual cells of control data are processed asynchronously on the synchronous serial bus. The MOST bus further has an asynchronous channel, also operated in asynchronous mode but separately from the control channel. This channel is used for "bursty" information, i.e. considerable amounts of data for which the timing requirements are not so high.

A problem with the control channel is the absence of effective priority handling, leading to non-deterministic behavior. Even though the transceivers are adapted to handle priorities, the control channel section of the device driver (e.g. the NetService software from Oasis Inc.) typically does not. Further the number of priority levels is too low, i.e. each message can not have a uniqe priority.

Further, the control channel is conventionally designed as a point-to-point architecture. In combination with the insufficient priority handling, this leads to a very "bursty" behavior when several nodes want to send periodical notification messages to be received by several nodes at the same time, in turn leading to collisions on the control channel and resending of messages. This results in inefficient usage of the control channel bandwidth. Even though broad cast and group-cast procedures can be effected based on the point-to-point architecture, such solutions are not satisfactory.

Also, there is a large control message overhead for each single bit of information.

Finally, the control channel is also used by internal administration messages (system messages) between the node transceivers, outside the control of the application programmer.

When designing a vehicle network, it is important to be able to ensure predictable real-time communication between different control units of the vehicle. For this reason, software tools for network design should preferably include support for predicting and analyzing network behavior. The Volcano Network Architect™ (VNA) is provided with such support, and can successfully predict the behavior of vehicle control networks such as CAN and LIN networks. Design using such prediction capabilities is referred to as "correctness by design".

However, due to the non-predictability of the control channel, it is difficult to make a mathematical model of conventional multimedia networks (e.g. D2B, MOST). Therefore, no design tools are able to successfully integrate such networks with the vehicle control networks (e.g. CAN, LIN), and therefore development and integration cost for multimedia networks are today very high. Considerable work must be done by "trial-and-error" in the integration phase, e.g. decreasing the bandwidth utilization on the control channel until a required worst case timing response has been reached.

The solutions available today for getting better worst case timings on the control channel are:
- Reduce the number of application messages, i.e. reduce functionality.
- Sending application messages in packets over the MOST asynchronous channel.
- Sending application messages over another network, e.g. CAN.

Sending data over the MOST asynchronous channel can solve some of the immediate problems by reducing the amount of data sent in the control channel, to free more bandwidth and thereby get better worst cases, but the MOST asynchronous channel has the same basic problem for real-time traffic as the MOST control channel. The reason is that the both the MOST asynchronous channel and the MOST control channel have non-deterministic behavior.

An example of a prior art bandwidth allocation algorithm for a serial bus is given in US 5,982,780 A.

### Summary of the invention

An object of the present invention is to overcome at least some of the problems mentioned above, and provide a way to transmit non-streaming data deterministically on a serial bus network between several nodes simultaneously.

According to a first aspect of the invention, this object is achieved by a method for communicating data of the kind mentioned by way of introduction, further comprising arranging data in a virtual data frame, scheduling said virtual data frame in relation to other virtual data frames, allocating a portion of each clocked data frame for transmitting said virtual data frame, and broadcasting said virtual data frame on the serial bus by dividing the virtual data frame into a plurality of units, and including each unit in an allocate portion of a respective one of a plurality of consecutive clocked data frames.

According to a second aspect of the invention, the object is achieved by a network node of the kind mentioned by way of introduction, wherein the device driver comprises means for arranging data in a virtual data frame and scheduling said virtual data frame in relation to other virtual data frames, and the transceiver is arranged to allocate a portion of each clocked data frame for transmitting said virtual data frame and broadcast the virtual data frame onto the serial bus by dividing the virtual data frame into a plurality of units, and including each unit in an allocated portion of a respective one of a plurality of consecutive clocked data frames.

The allocated portion can be used by several nodes to send and receive messages, enabling communication from several nodes to several nodes using the same portion of the clocked data frame.

The virtual frame according to the invention allows a separate priority handling of the data to be sent, outside the handling of the serial bus. Thereby, problems associated with priority handling may be avoided, and a predictable communication is achieved. Further, the virtual frame is not communicated point-to-point, further improving the performance when a message is sent to several nodes. Examples of situations when such communication is convenient are when several controllers of a node need to be notified of a condition, such as when a variable in the node has reached its maximum, and when several nodes having a HMI are notified of a change of status in a node using periodic status signals.

The method is particularly useful for communicating application control data between nodes. By sending application control data according to the invention, the control channel is relieved of a large portion of its traffic, improving performance for the signals still transmitted in this channel (e.g. system messages).

The virtual data frames according to the invention have their own schedule "on top" of the network. i.e. an add-on solution that can co-exists with networks as MOST and software like NetServices. The invention itself is network independent, and can adapted to port with other multimedia networks (e.g. SMARTwireX) using different network management software.

Preferably, the allocated portion is allocated in a synchronous segment of the clocked data frame. By using a synchronous channel of the serial bus for transmitting the virtual frames, it is easier to achieve predictability, particularly in a MOST network.

Preferably, each unit of the virtual frame has equal size. This facilitates the treatment of virtual frames, and also allocation of space on the serial bus.

The virtual frame preferably includes a frame ID field comprising information identifying the type of data, a mask field comprising information identifying the destination of the data, and a data field in which the data is placed. Preferably, the ID field and the mask field correspond to one unit each, while the data field corresponds to several units of data.

While each virtual frame is broadcasted to all nodes, the mask field enables a receiving node to discard messages not intended for it. For messages intended for a node, the ID field will tell the node which information that is contained in the message.

The scheduling of the virtual frames can be performed by a static, time triggered algorithm, similar to TDMA, wherein only one node transmits virtual frames during each slot. During each slot one or several virtual frames may be transmitted.

This process is advantageous when handling small amounts of data, regularly sent from all nodes. An example of such data is application control data.

The scheduling of virtual frames can also be performed by a dynamic, event triggered, priority driven algorithm, similar to CSMA/CR, wherein the node to send information is decided by arbitration based on the priority of the message.

This process is advantageous when the amounts of data to be sent from each node is large, i.e. when handling "bursty" information such as telephone book updates.

The two mentioned ways to process virtual frames can be combined. In that case, two portions are allocated in each clocked data frame, one for virtual frames handled by a time-based algorithm, and one for virtual frames handled by a priority-based algorithm.

This allows a combination of the advantages associated with each processing algorithm.

According to a preferred embodiment, the method further comprises receiving a data frame carried by a second serial bus, extracting selected portions of the received data frame, and including these selected portions in the data arranged in the victual data frame.

The second serial bus may have a synchronous physical layer as the first serial bus, but may alternatively be asynchronous.

This embodiment of the invention can be implemented in a system comprising a first node according to the second aspect of the invention, and a second node adapted to be connected to a second serial bus. The second node comprises means for receiving a data frame from the second serial bus, and the system comprises means for extracting selected portions of data contained in the received data frame, the arranging and scheduling means of the first node being adapted to including said selected portions in the data arranged in the virtual frame.

Such a system can act as a gateway to provide connection between different data buses, without impacting on the characteristics of each bus. In particular, such a gateway may be advantageous for connecting a D2B or MOST network with a CAN or LIN network. It may also be used to connect two MOST networks.

### Brief description of the drawings

These and other aspects of the invention will be described in further detail with reference to the drawings, illustrating presently preferred embodiments of the invention.

Fig 1 illustrates, in block diagram form, a network with two nodes according to an embodiment of the invention.

Fig 2 illustrates a virtual data frame according to an embodiment of the invention.

Fig 3 illustrates a plurality of clocked data frames each including a unit of the virtual frame in fig 2.

Fig 4a is a more detailed block diagram of the virtual frame driver in fig 1 according to a first embodiment.

Fig 4b is a more detailed block diagram of the virtual frame driver in fig 1 according to a second embodiment.

Fig 5 is a more detailed block diagram of the transceiver in fig 1.

Fig 6 schematically illustrates four nodes in a digital network.

Fig 7 illustrates TDMA processing of data packets originating from the nodes in fig 6.

Fig 8 is a block diagram of a node according to a second embodiment of the invention.

Fig 9 is a block diagram of a gateway according to an embodiment of the invention.

Fig 10 is a flow chart of the main steps of a method according to an embodiment of the invention.

Fig 11 is a flow chart of additional steps of a method according to a second embodiment of the invention.

### Detailed description of preferred embodiments

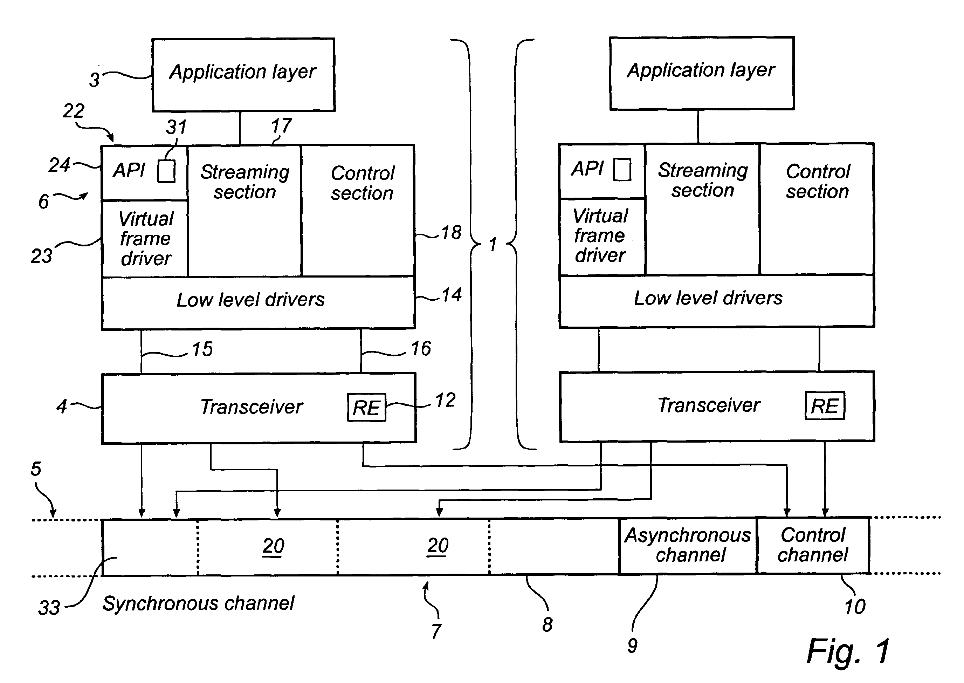

Fig 1 illustrates two nodes 1 of a serial network, connecting a plurality of digital applications, e.g. multimedia implementations in a vehicle. Each node 1 comprises an application layer 3, a transceiver 4 interfacing a serial data bus 5, and an intermediate device driver layer 6, connecting the application layer 3 with the transceiver 4.

The network can be a token ring based network, or any other synchronous data network, where data frames 7 are generated by a timing master and carried by a synchronized bus between nodes. The bus 5 can be an optical bus. In this particular case, the data bus is a MOST bus, comprising a synchronous channel 8, an asynchronous channel 9, and a control channel 10. Both the asynchronous channel 9 and the control channel 10 are operated in asynchronous mode, i.e. cells/packets of data are handled asynchronously, even though they are sent on a synchronous bus. Below, some aspects are described with particular reference to a MOST network, but this is not to be considered as a limitation of the invention, which on the contrary may be used in relation to any serial bus network.

The transceiver 4 handles communication with the serial data bus 5 by intercepting clocked data frames 7 transported by the bus 5, extracting/inserting data from/into these frames, and transmitting them. The transceiver 4 can include a routing engine 12, for routing information received from the device driver layer 6 to different portions of the intercepted data frames 7.

The device driver layer 6 comprises a low level driver layer 14, handling the contact with the transceiver 4 through two ports, a source port 15 and a control port 16. These ports may be implemented as two serial ports, using different protocols, e.g. I²S and I²C respectively. Alternatively, the ports are implemented in a single parallel port, where an interface handles separation of the two flows of different data. Communication via the ports 15, 16 is handled by a streaming section 17 and a control section 18.

The control section 18, e.g. a NetService software from Oasis Inc., is responsible for sending data on the control channel 10. This data has a specific destination (point-to-point communication). The control section 18 is used to allocate portions 20 of the synchronous channel 8 for streaming data transmission. Messages on the control channel are sent using an arbitration mechanism, e.g. a round-robin, possibly combined with a limited number of priority levels.

The streaming section 17 is adapted to communicate streaming media contents from a particular node in the portion 20 of the synchronous channel allocated by the control section 18 to this particular node. This is accomplished by including a portion of streaming data with every frame intercepted by the transceiver. This data can be received by any node 1 in the network (broadcast) .

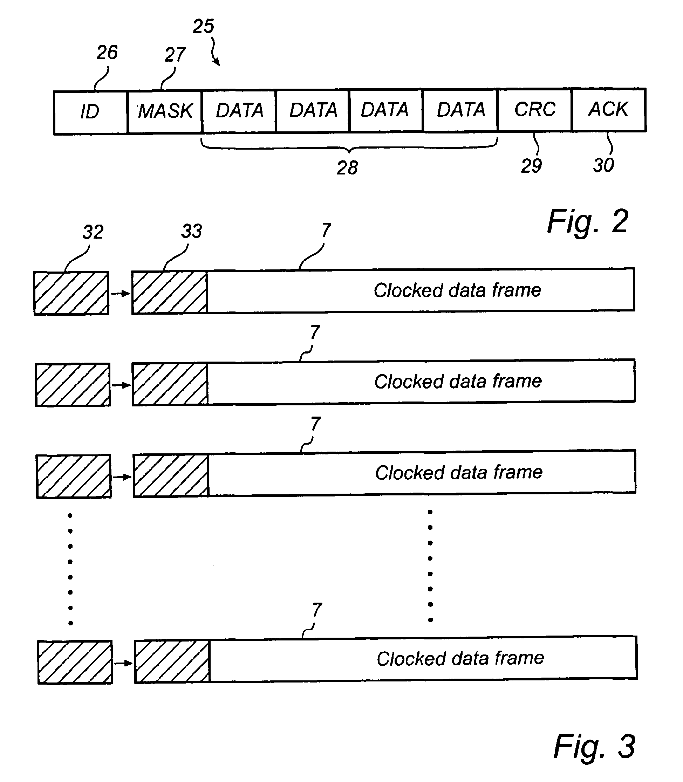

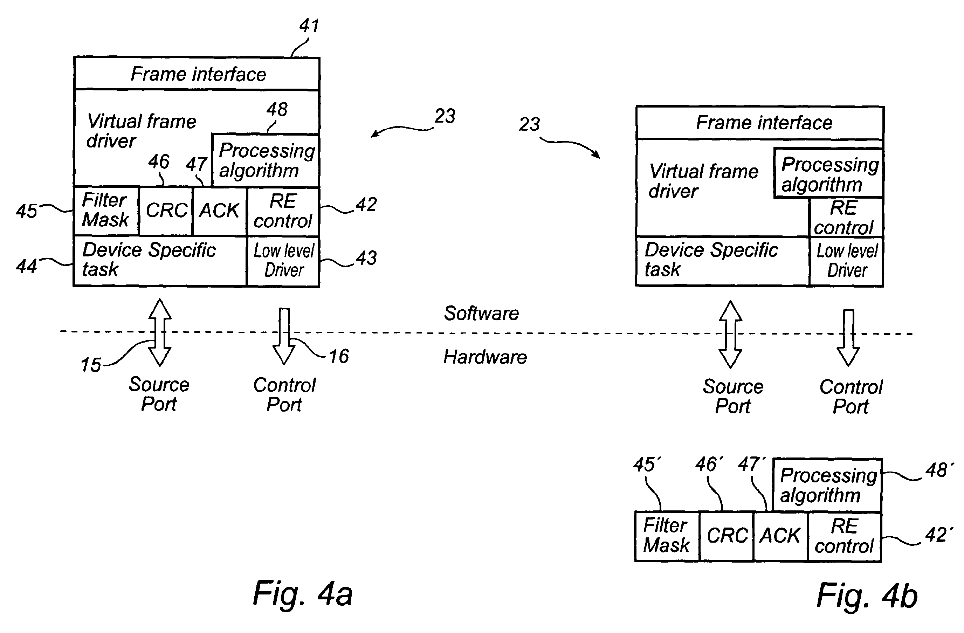

According to the invention, the device driver layer further comprises a virtual frame section 22, in the present example including a virtual frame driver 23 and an application program interface (API) 24. If included in the node, the API 24 provides a network independent signal interface for message/signal communication that is identical or similar as for other networks, e.g. CAN/LIN networks. Such an API is available from Volcano. The structure of the virtual frame driver 23 will be described more in detail below, with reference to fig 4a and 4b. First, however, the function of the virtual frame section 20 will be described with reference to fig 2, 3 and 10.

In the virtual frame driver 23, virtual frames 25 according to fig 2 are defined (S2). In the illustrated example, each frame 25 has an ID field 26, a mask field 27, a data field 28, a cyclic redundancy code (CRC) field 29 and an acknowledgement (ACK) field 30. Preferably, the ID, mask, CRC and ACK fields can be of equal length, e.g. 2 bytes, while the length of the data field is a multiple of this length, e.g. 8 bytes.

The ID field 26 identifies the type of information contained in the frame 25. Preferably, information having the same or similar timing requirements are grouped in the same frame. The ID 26 can simply consist of a binary number, and each API 24 can be provided with a look-up table for associating this number with an information type definition, stating what information each bit in the data field corresponds to. The look-up table can be stored in a flash memory 31, so that reconfiguration and changing of timing requirements can be made in post-compile time. The system integrator specifies the timing of the signals, which can be changed during integration if needed. The virtual frame driver 23 places the signals in the virtual frames, depending on the timing requirements stored in the flash memory 31. The application programmer does not need to know in which virtual frame "his" signal is placed, just the name and size of the signals to send and receive.

The mask field 27 identifies to which node(s) 1 the information is relevant. Remaining nodes will simply discard the virtual frame. The mask 27 can be a further binary number, wherein each binary digit is associated with a particular node. A binary "one" indicates that the information is relevant for a particular node, while a binary "zero" indicates irrelevant information. This results in a publisher/subscriber model, where sending node publishes a signal, and the subscribers of this signal are defined in the mask field 27.

The CRC field 29 and the ACK field 30 are used for error handling, and will be briefly mentioned below.

The data field 28 carries the actual data, and thanks to the type identifier (ID field 26) the information can be very compressed. In principle, each bit can be associated with a particular information content, by providing the mentioned look-up tables with suitable information.

Note that the virtual frame format may deviate from the one described above. For example, the ACK field 30 may be substituted with a NAK (not acknowledged) field, or may be dispensed with completely.

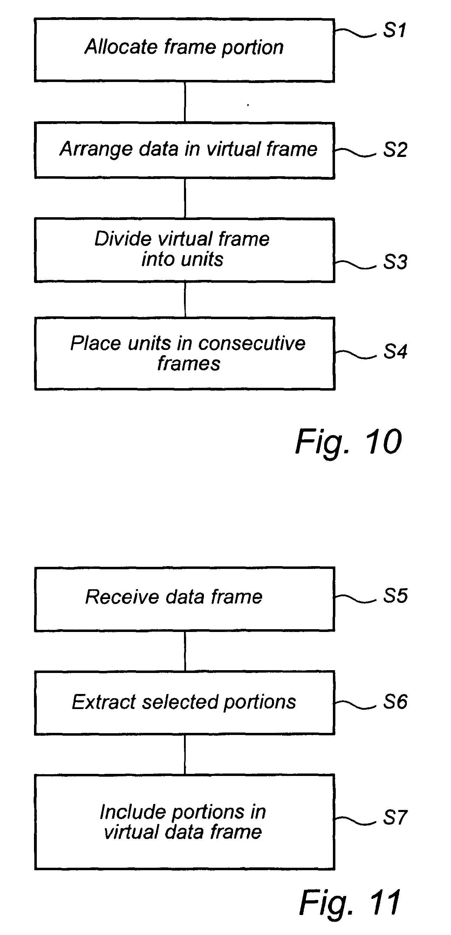

With reference to fig 3 and 10, the virtual frame 25 is then divided (S3) into units 32, in the illustrated example each having the same length as the ID, mask, CRC and ACK fields 26, 27, 29, 30. The virtual frame driver 23 then controls the low level driver 14 to communicate (S4) these units 32 to the transceiver 4, for broadcast onto the serial bus 5, one at a time in consecutive clocked data frames 7.

The transceiver 4 is adapted to allocate (S1) a certain portion 33 of the bus, in the illustrated example a portion of the synchronous channel 8, for transmission of the virtual frame units 32. The allocated portion 33 must be at least as long as the largest unit, and in the given example with equal length units 32, it preferably has the same length.

In a receiving node, the virtual frame driver 23 receives the virtual frame units 32 from the transceiver 4 as the clocked data frames 7 are intercepted. Unit by unit, the virtual frame 25 is then rebuilt.

First, the CRC 29 is checked, to verify that no errors have occurred during transmission. Then, the mask field 27 is analyzed. If the masking bit associated with receiving node is not enabled, the virtual frame is discarded without further processing. If, on the other hand, this bit is enabled, the frame 25 (or only the frame ID and data field) is sent to the API 24, where the ID 26 is looked up in the look-up table, in order to determine what information the data field 28 contains. The information relevant for the digital application in question is then sent to the application layer 3.

It is also possible to perform the described process in the opposite order, i.e. first determine if the relevant masking bit is enabled, and only if this is the case perform the CRC check. This saves computational power, but introduces the risk of discarding relevant frames (as there may be an error in the mask field).

Fig 4a shows a more detailed block diagram of a first embodiment of a virtual frame driver 23, implemented completely in software and adapted for a transceiver with two serial ports 15, 16. Starting at the top, the driver comprises a frame interface 41 towards the API 24. The interface 41 is preferably designed in a way to limit the required reprogramming of already available APIs, such as the Volcano API for CAN/LIN.

Below the frame interface 41, the frame driver is divided into two paths, adapted to communicate with the transceiver source port 16 and control port 15 respectively.

The path communicating with the control port 16 comprises a routing engine controller 42 and a low level driver 43 (part of reference 14 in fig 1). The path communicating with the source port 15 comprises a device specific task 44 and units 45, 46, 47 for processing the mask field 27, CRC field 28 and ACK/NAK field 30.

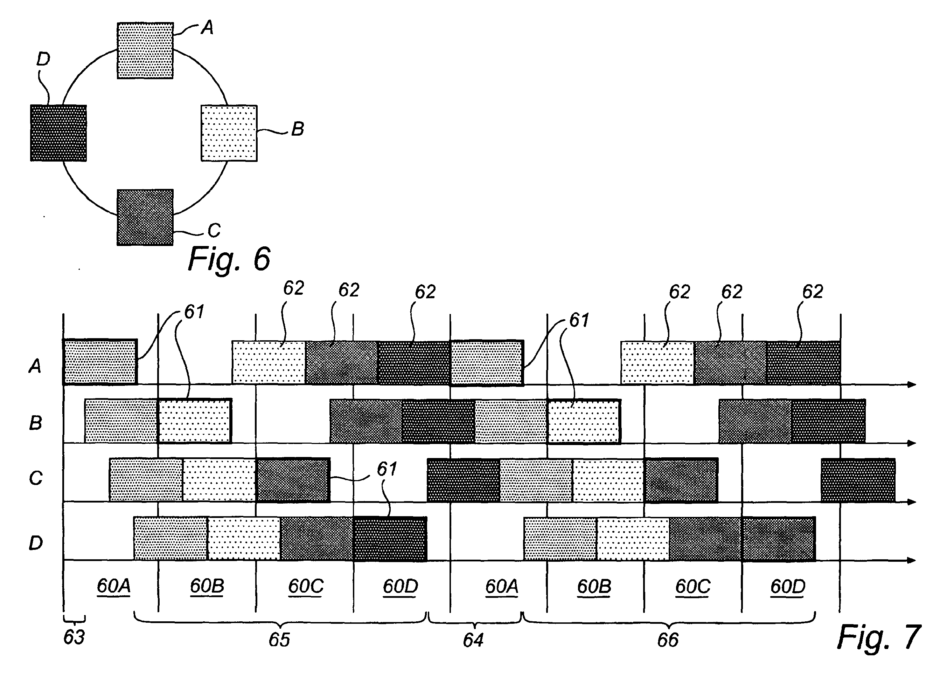

Both paths are controlled by a processing algorithm 48, which can be time triggered or event triggered, or a combination. A time triggered, TDMA-like alternative will be described in more detail below, with reference to fig 6 and 7. The processing algorithm 48 handles synchronization of the virtual frames, and also activation/deactivation of the virtual frame driver in a node.

Fig 4b shows a second embodiment of the virtual frame driver 23, implemented partially in hardware. Here, the units 45', 46', 47' for processing the mask field 27, CRC field 29 and ACK/NAK field 30, as well as parts of the processing algorithm 48' and routing engine controller 42' are implemented in hardware.

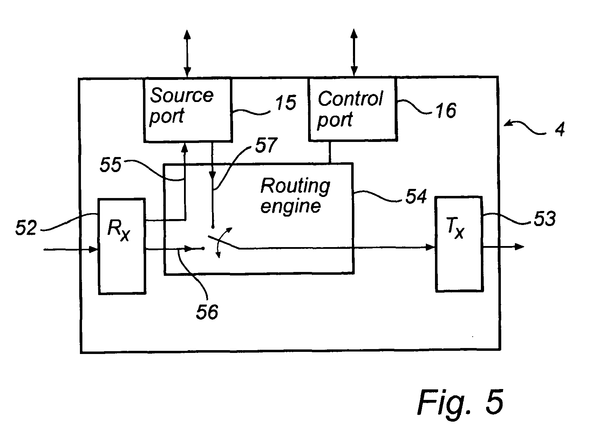

Fig 5 shows a block diagram of a transceiver 4 according to an embodiment of the invention. In this particular case, the transceiver has two serial ports 15, 16, and a network interface comprising a receive buffer 52 (Rx), and a transmit buffer 53 (Tx). The network interface handles the interception of frames 7 on the serial bus 5, and is controlled by a routing engine 54.

In a conventional MOST network, the source port 15 communicates with the streaming section 17 of the device driver layer 6 via the I²S protocol, and the control port 16 communicates with the control section 18 of the device driver layer 6 via the I²C protocol. This part of the transceiver functionality is known per se, and will not be further described.

According to the invention, the source port 15 is arranged to read information from a portion of the receive buffer 52 so as to direct units 32 of virtual frames 25 to the virtual frame driver 23 (arrow 55). Further, the routing engine 54 is arranged to direct units 32 of a virtual frame 25 to the transmit buffer 53, either from the receive buffer 52 (arrow 56) (forward mode) or from the source port 15 (arrow 57) (send mode).

The control of the routing engine 54 requires adaptation, which is accomplished by the routing engine controller 42, 42' in the virtual frame driver (see fig 4a, 4b). If the routing engine controller 42 is implemented in software outside the transceiver itself (fig 4a), the control commands are communicated via the control port 16, as indicated in fig 5. Such an implementation may introduce a delay during switching between forward and send. Therefore, the controller 42' is preferably implemented in hardware (fig 4b), eliminating the switching delay.

The transceiver 4 can be realized in a OS8104 circuit, connected to a microprocessor and/or a DSP, realizing the virtual frame driver 23. In the case of the ports 15 and 16 being implemented in a parallel port, the OS8104 circuit and processor can be interconnected by a FPGA including parts of the virtual frame driver 23.

Fig 6 shows schematically a ring network with four nodes A, B, C; D, and fig 7 shows how virtual frames 25 can be scheduled on the serial bus 5 using a time triggered algorithm, similar to TDMA (Time Division Multiple Access).

One of the nodes acts as timing master for the communication of virtual frames (not necessarily the same node acting as timing master for the serial bus itself, e.g. a Token Ring master). During an initialization procedure, the timing master communicates a synchronization frame to the other nodes (slaves), thereby defining a global time. The timing master further divides the global time into slots 60A, 60B, 60C, 60D, during which the nodes A, B, C, D of the network alternatingly are permitted to send virtual frames 25 onto the bus.

As mentioned above, the source port 15 in each node A, B, C, D is arranged to direct the allocated portion 33 of each clocked data frames 7 in the receive buffer 52, i.e. a unit of a virtual frame 25, to the virtual frame driver 23. Further, the routing engine 54 is arranged to switch between two modes, a first mode where received units are simply forwarded, and a second mode where instead units belonging to a new virtual frame are sent. In fig 7, this is illustrated as each node alternatingly sending packets 61 of data (thick outline) from the node onto the network, and forwarding packets 62 of data received from the bus. Note that the term "packet" here could comprise one or several virtual frames 25.

The time required for switching between forwarding and sending is assumed to be zero in fig 7, but as mentioned above, in relation to fig 5, a certain switching time may be required depending on the implementation of the transceiver.

As shown in fig 7, a delay 63 of the serial bus 5 may occur in each node. In a MOST network, this delay 63 is equal to two clocked data frames. In the scheduling of packets 61, 62, this results in unused bandwidth in the form of an aggregated separation 64 between two groups 65, 66 of packets, equal to the mentioned delay 63 times the number of nodes. The size of the packets depends on requirements on bandwidth vs response time.

During the separation time 64, a node will receive frames sent by itself (see fig 7), and the CRC of these frames can be checked. If the CRC is OK, this indicates that the frame should have arrived successfully in all other nodes. If this error check is not sufficient, e.g. when it is important to know if a signal has been successfully received at a particular node, the ACK/NAK field 30 may be used.

A sending node should preferably continue to send zeroes to the bus 5 after having sent a packet, instead of forwarding these "old" frames on the bus 5. Due to the synchronization, the next node in the network knows when it should start to send a packet, and will override these zeroes.

Not all nodes in a MOST network are necessarily active. Instead, a node can be switched on/off by the control section 18. When a node is switched OFF (power save mode), the current clocked frame 7 is destroyed, and the delay 63 on the bus 5 is removed. The node is now no longer a part of the MOST network. Conversely, when a node is switched ON, the current clocked frame 7 will again be destroyed, and the mentioned delay 63 of two clocked frames 7 will be introduced. This disturbance of communication will be handled by error handling routines, e.g. by the CRC, and by the timing master of the Token Ring. An active MOST node will not automatically acknowledge the existence of virtual frames, but will only experience that a portion of the synchronous channel is allocated. Any active MOST node provided with a virtual frame driver 23 may however be adapted to receive virtual frames 25 as described above.

In order to also be able to send virtual frames onto the bus 5, the node must further have an allocated slot 60A-D in the global time. The allocation of such a slot 60A-D to an active MOST node will require a resynchronization of the scheduling algorithm in the nodes. Once allocated, such a slot 60A-D can be activated or deactivated at the choice of the API 24 in the node, without any resynchronization of the network necessary.

A time triggered scheduling of TDMA-type is suitable for data of limited size with high timing requirements, e.g. application control data (changing navigation via touch screen, etc.). For data of greater size with less strict timing requirements, such as periodical updates of information it may be advantageous to implement a different type of scheduling, such as an event triggered scheduling, for the processing of virtual frames. For example, an event triggered, priority driven, dyncamic scheduling, similar to CSMA/CR (Carrier Sense Multiple Access with Collision Resolution) can be used. In such a case, the processing algorithm includes an arbitration mechanism, in order to send the virtual frames in a suitable order based on priority.

In a conventional MOST network, a possible failure in the network will be detected by the control section 18 of the timing master, which reinitializes the network when the cause of failure is removed. In a similar way, the virtual frame timing master must be adapted to reinitialize and resynchronize the nodes participating in the communication of virtual frames 25, in order to handle errors on the serial bus 5.

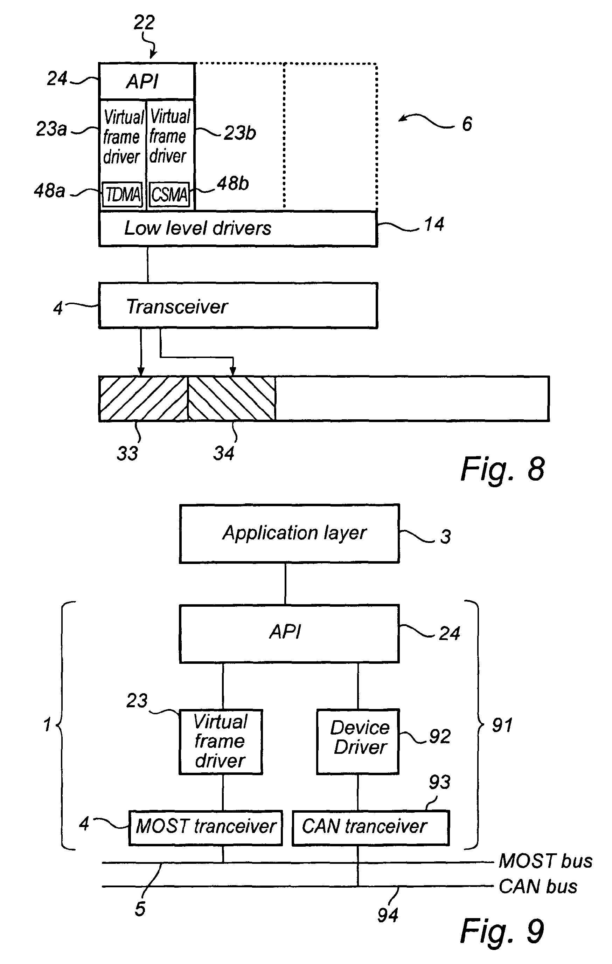

As mentioned in connection to fig 4a and 4b, the processing algorithm 48 is implemented in the virtual frame driver 23. It is possible, and within the scope of the present invention, to arrange for a combination of different processing algorithms, for different types of data. This is shown in fig 8. In such a case, two different portions 33, 34 of the clocked data frame 7 can be allocated, and used by different virtual frame drivers 23a, 23b in the virtual frame section 22 of the device driver layer 6. Each virtual frame driver 23a, 23b uses a different processing algorithm 48a, 48b, respectively. Virtual frames containing different kinds of data can then be processed in parallel, and independently of each other.

Fig 9 shows how a MOST node 1 adapted according to the invention can act as a gateway to a node 91 of a different network, such as a CAN (Controller Area Network) or a LIN (Local Interconnect Network). The steps of this procedure are illustrated in fig 11.

As in fig 1, an application layer 3 is connected to an API 24, in turn connected to a virtual frame driver 23 communicating with a MOST transceiver 4 interfacing with a MOST bus 5. The API 24 is further connected to a second device driver 92, interfacing with a CAN transceiver 93. The API 24 can thus receive frames (S5) from the CAN bus 94, extract (S6) selected data from these frames, and include (S7) such data in the data field 28 of virtual frames 25 created in the virtual frame driver 23.

In order to enable such inter-network communication, relevant types of data available in the CAN must be identified and included in one or several of the data field definitions, associated with individual IDs in the look-up tables in'the API. By extracting only the relevant pieces of information from the CAN frames, only a small amount of data needs to be included in the virtual frame. The invention thus provides a very efficient gateway between the two networks.

Many variations of the above described embodiments will be apparent to the skilled person, without departing from the scope of the appended claims. For example, the serial data bus 5 may be of different composition. Also, the details of the node design given should be seen mainly as an example of a possible implementation, and will in practice be dependent on the application, and on the hardware used in e.g. the transceiver. For example, the virtual frame section 22 can be included in the control section 18.

## Claims

1. A method for communicating data between a plurality of nodes connected by a serial bus (5) carrying data in clocked data frames (7),
**characterized by** the steps of
arranging (S2) data in a virtual data frame (25), scheduling said virtual data frame in relation to other virtual data frames,
allocating (S1) a portion (33) of each clocked data frame (7) for transmitting said virtual data frame (25), and
broadcasting (S3, S4) said virtual data frame (25) on the serial bus (5) by dividing (S3) the virtual data frame (25) into a plurality of units (32), and including (S4) each unit in an allocated portion (33) of a respective one of a plurality of consecutive clocked data frames (7).

2. The method according to claim 1, wherein said data is application control data.

3. The method according to claim 1 or 2, wherein each clocked data frame (7) has a segment (8) used for communicating synchronous data, and wherein said allocated portion (33) is allocated in said synchronous segment.

4. The method according to any of the preceding claims, wherein said virtual data frame (25) includes a data field (28) in which the data is placed.

5. The method according to any of the preceding claims, wherein said virtual data frame (25) includes a frame ID field (26) comprising information identifying the type of data.

6. The method according to any of the preceding claims, wherein said virtual data frame (25) includes a mask field (27) comprising information identifying the destination of the data.

7. The method according to any of the preceding claims, wherein at least some of said virtual data frames (25) are scheduled using a time triggered algorithm.

8. The method according to any one of the preceding claims, wherein at least some of said virtual data frames (25) are scheduled using an event triggered algorithm.

9. The method according to claim 8, when dependent upon claim 7, wherein two portions (33, 34) are allocated in each clocked data frame (7), one for virtual data frames scheduled by said time triggered algorithm, and one for virtual data frames scheduled by said event triggered algorithm.

10. The method according to any of the preceding claims, further comprising:
receiving (S5) a data frame carried by a second serial bus,
extracting (S6) selected portions of said received data frame, and
including (S7) said selected portions in said data arranged in said virtual data frame.

11. A network node (1) adapted to be connected to a serial bus (5) for carrying data to and from other nodes in clocked data frames (7), said node including
a transceiver (4) adapted to be connected to the serial bus (5), for transmitting and receiving said clocked data frames (7), and
a device driver (6), adapted to connect said transceiver (4) with a digital device serviced by the node,
**characterized in that**
said device driver (6) comprises means (23) for arranging data in a virtual data frame (25), and for scheduling said virtual data frame in relation to other virtual data frames, and **in that**
said transceiver (4) is arranged to broadcast said virtual data frame (25) onto the serial bus (5) by dividing the virtual data frame (25) into a plurality of units (32) and including each unit (32) in an allocated portion (33) of a respective one of a plurality of consecutive clocked data frames (7).

12. A system comprising a first node (1) according to claim 11, and a second node adapted to be connected to a second serial bus (94),
said second node comprising means (92, 93) for receiving a data frame from said second serial bus (94), and
said system comprising means (24) for extracting selected portions of data contained in said received data frame,
said arranging and scheduling means (23) of said first node being adapted to include said selected portions in the data arranged in said virtual data frame.

13. A system comprising a first network of nodes according to claim 11, a second network of nodes connected via a second serial data bus, and a system according to claim 12.

## Patentansprüche

1. Verfahren zum Übermitteln von Daten zwischen mehreren Knoten, die durch einen seriellen Bus (5), der Daten in getakteten Daten-Frames (7) transportiert, verbunden sind,
**gekennzeichnet durch** folgende Schritte:
Anordnen (S2) von Daten in einem virtuellen Daten-Frame (25),
Festlegen des virtuellen Daten-Frames in Bezug auf andere virtuelle Daten-Frames,
Zuweisen (S1) eines Abschnitts (33) jedes getakteten Daten-Frames (7) zum Übermitteln des virtuellen Daten-Frames (25), und
Übertragen (S3, S4) des virtuellen Daten-Frames (25) auf den seriellen Bus (5) **durch** Aufteilen (S3) des virtuellen Daten-Frames (25) in mehrere Einheiten (32) und **durch** Einbinden (S4) jeder Einheit in einen zugewiesenen Abschnitt (33) eines jeweiligen Daten-Frames aus mehreren aufeinanderfolgenden getakteten Daten-Frames (7).

2. Verfahren nach Anspruch 1, wobei die Daten Anwendungssteuerungsdaten sind.

3. Verfahren nach Anspruch 1 oder 2, wobei jeder getaktete Daten-Frame (7) ein Segment (8) aufweist, das zum Übermitteln synchroner Daten verwendet wird und wobei der zugewiesene Abschnitt (33) in dem synchronen Segment zugewiesen wird.

4. Verfahren nach einem der vorhergehenden Ansprüche, wobei der virtuelle Daten-Frame (25) ein Datenfeld (28) aufweist, in dem die Daten angeordnet sind.

5. Verfahren nach einem der vorhergehenden Ansprüche, wobei der virtuelle Daten-Frame (25) ein Rahmen-ID-Feld (26) aufweist, das Informationen enthält, mit denen der Datentyp ermittelt wird.

6. Verfahren nach einem der vorhergehenden Ansprüche, wobei der virtuelle Daten-Frame (25) ein Maskenfeld (27) aufweist, das Informationen enthält, mit denen das Ziel der Daten ermittelt wird.

7. Verfahren nach einem der vorhergehenden Ansprüche, wobei mindestens einige der virtuellen Daten-Frames (25) festgelegt werden, indem ein zeitgesteuerter Algorithmus verwendet wird.

8. Verfahren nach einem der vorhergehenden Ansprüche, wobei mindestens einige der virtuellen Daten-Frames (25) festgelegt werden, indem ein ereignisgesteuerter Algorithmus verwendet wird.

9. Verfahren nach Anspruch 8, sofern er von Anspruch 7 abhängig ist, wobei zwei Abschnitte (33, 34) in jedem getakteten Daten-Frame (7) zugewiesen werden, einer für virtuelle Daten-Frames, die von dem zeitgesteuerten Algorithmus festgelegt werden, und einer für virtuelle Daten-Frames, die von dem ereignisgesteuerten Algorithmus festgelegt werden.

10. Verfahren nach einem der vorhergehenden Ansprüche, das ferner Folgendes umfasst:
das Empfangen (S5) eines Daten-Frames, der von einem zweiten seriellen Bus transportiert wird,
das Herauslösen (S6) ausgewählter Abschnitte des empfangenen Daten-Frames und
das Einbinden (S7) der ausgewählten Abschnitte in die Daten, die in dem virtuellen Daten-Frame angeordnet sind.

11. Netzwerkknoten (1), der geeignet ist, mit einem seriellen Bus (5) verbunden zu werden, um Daten zu und von anderen Knoten in getakteten Daten-Frames (7) zu transportieren, wobei der Knoten Folgendes umfasst:
einen Transceiver (4), der geeignet ist, mit dem seriellen Bus (5) verbunden zu werden, zum Übermitteln und Empfangen der getakteten Daten-Frames (7), und
einen Gerätetreiber (6), der geeignet ist, den Transceiver (4) mit einer digitalen Vorrichtung, die von dem Knoten bedient wird, zu verbinden,
**dadurch gekennzeichnet, dass**
der Gerätetreiber (6) Mittel (23) zum Anordnen von Daten in einem virtuellen Daten-Frame (25) und zum Steuern des virtuellen Daten-Frames in Bezug auf andere virtuelle Daten-Frames aufweist, und dass
der Transceiver (4) so angeordnet ist, dass der virtuelle Daten-Frame (25) auf den seriellen Bus (5) durch Aufteilen des virtuellen Daten-Frames (25) in mehrere Einheiten (32) und durch Einbinden jeder Einheit (32) in einen zugewiesenen Abschnitt (33) eines jeweiligen Daten-Frames aus mehreren aufeinanderfolgenden getakteten Daten-Frames (7) übertragen wird.

12. System, das einen ersten Knoten (1) nach Anspruch 11 aufweist, und einen zweiten Knoten, der geeignet ist, mit einem zweiten seriellen Bus (94) verbunden zu werden,
wobei der zweite Knoten Mittel (92, 93) zum Empfangen eines Daten-Frames von dem zweiten seriellen Bus (94) aufweist, und
wobei das System Mittel (24) zum Herauslösen ausgewählter Abschnitte von Daten, die in dem empfangenen Daten-Frame enthalten sind, umfasst,
wobei die Mittel zum Anordnen und Steuern (23) des ersten Knotens geeignet sind, die ausgewählten Abschnitte in den Daten, die in dem virtuellen Daten-Frame angeordnet sind, einzubinden.

13. System, das ein erstes Knoten-Netzwerk nach Anspruch 11, ein zweites Knoten-Netzwerk, das über einen zweiten seriellen Datenbus verbunden ist, und ein Gateway-System nach Anspruch 12 aufweist.

## Revendications

1. Procédé de communication de données entre plusieurs noeuds reliés par un bus en série (5) portant des données dans des trames de données cadencées (7),
**caractérisé par** les étapes de
l'agencement (S2) de données dans une trame de données virtuelle (25),
l'ordonnancement de ladite trame de données virtuelle en relation avec d'autres trames de données virtuelles,
l'allocation (S1) d'une portion (33) de chaque trame de données cadencée (7) pour transmettre ladite trame de données virtuelle (25), et
la dififusion (S3, S4) de ladite trame de données virtuelle (25) sur le bus en série (5) en divisant (S3) la trame de données virtuelle (25) en plusieurs unités (32), et l'inclusion (S4) de chaque unité dans une portion allouée (33) de l'une respective de plusieurs trames de données cadencées consécutives (7).

2. Procédé selon la revendication 1, dans lequel lesdites données sont des données de commande d'application.

3. Procédé selon la revendication 1 ou 2, dans lequel chaque trame de données cadencée (7) comporte un segment (8) utilisé pour communiquer des données synchrones, et dans lequel ladite portion allouée (33) est allouée dans ledit segment synchrone.

4. Procédé selon l'une quelconque des revendications précédentes, dans lequel ladite trame de données virtuelle (25) comprend un champ de données (28) dans lequel sont placées les données.

5. Procédé selon l'une quelconque des revendications précédentes, dans lequel ladite trame de données virtuelle (25) comprend un champ d'identification de trame (26) comprenant des informations identifiant le type de données.

6. Procédé selon l'une quelconque des revendications précédentes, dans lequel ladite trame de données virtuelle (25) comprend un champ de masque (27) comprenant des informations identifiant la destination des données.

7. Procédé selon l'une quelconque des revendications précédentes, dans lequel au moins certaines desdites trames de données virtuelles (25) sont ordonnancées en utilisant un algorithme à déclenchement dans le temps.

8. Procédé selon l'une quelconque des revendications précédentes, dans lequel au moins certaines desdites trames de données virtuelles (25) sont ordonnancées en utilisant un algorithme à déclenchement par événement.

9. Procédé selon la revendication 8 dépendant de la revendication 7, dans lequel deux portions (33, 34) sont allouées dans chaque trame de données cadencée (7), l'une pour des trames de données virtuelles ordonnancées par ledit algorithme à déclenchement dans le temps, et l'autre pour des trames de données virtuelles ordonnancées par ledit algorithme à déclenchement par événement.

10. Procédé selon l'une quelconque des revendications précédentes, comprenant en outre :
la réception (S5) d'une trame de données portée par un deuxième bus en série,
l'extraction (S6) de portions sélectionnées de ladite trame de données reçue, et
l'inclusion (S7) desdites portions sélectionnées dans lesdites données agencées dans ladite trame de données virtuelle.

11. Noeud de réseau (1) apte à être relié à un bus en série (5) pour porter des données à destination et en provenance d'autres noeuds dans des trames de données cadencées (7), ledit noeud comprenant :
un émetteur-récepteur (4) apte à être relié au bus en série (5) pour transmettre et recevoir lesdits trame de données cadencées (7), et
un pilote de dispositif (6) apte à relier ledit émetteur-récepteur (4) à un dispositif numérique desservi par le noeud,
**caractérisé en ce que**
ledit pilote de dispositif (6) comprend un moyen (23) pour agencer des données dans une trame de données virtuelles (25) et pour ordonnancer ladite trame de données virtuelle en relation avec d'autres trames de données virtuelles,
et **en ce que** ledit émetteur-récepteur (4) est agencé pour diffuser ladite trame de données virtuelles (25) sur le bus en série (5) en divisant la trame de données virtuelle (25) en plusieurs unités (32) et en incluant chaque unité (32) dans une portion allouée (33) de l'une respective de plusieurs trames de données cadencées consécutives (7).

12. Système comprenant un premier noeud (1) selon la revendication 11, et un deuxième noeud apte à être relié à un deuxième bus en série (94),
ledit deuxième noeud comprenant un moyen (92, 93) pour recevoir une trame de données en provenance dudit deuxième bus en série (94), et
ledit système comprenant un moyen (24) pour extraire des portions sélectionnées de données contenues dans ladite trame de données reçue,
ledit moyen d'agencement et d'ordonnancement (23) dudit premier noeud étant apte à inclure lesdites portions sélectionnées dans les données agencées dans ladite trame de données virtuelle.

13. Système comprenant un premier réseau de noeuds selon la revendication 11, un deuxième réseau de noeuds reliés par l'intermédiaire d'un deuxième bus de données en série, et un système selon la revendication 12.
